# EUROPEAN PATENT APPLICATION

(11) **EP 3 203 775 A1**
(43) Date of publication of application: **09.08.2017**
(21) Application number: 17163176.5
(22) Date of filing: 06.11.2014
(51) Int. Cl.: H04W 28/18, H04L 1/00

(54) **METHOD AND APPARATUS FOR MODULATION CODING SCHEME SELECTION FOR RESPONSE FRAMES**

(30) Priority: 06.11.2013 US 201361900986 P; 05.11.2014 US 201414533403
(62) Divisional of application: 14806122.9
(71) Applicant: Qualcomm Incorporated, San Diego, CA 92121-1714 (US)
(72) Inventor: ASTERJADHI, Alfred, San Diego, California 92121-1714 (US); JAFARIAN, Amin, San Diego, California 92121-1714 (US); MERLIN, Simone, San Diego, California 92121-1714 (US)
(74) Representative: Carstens, Dirk Wilhelm

(57) **Abstract**

Certain aspects of the present disclosure relate to a methods and apparatus for selecting modulation coding schemes (MCS). In one aspect, a method for wireless communication includes processing a message identifying a duration constraint for a response message. The method further includes selecting one or more parameters for transmission of the response message based at least in part on the duration constraint.

## Description

### BACKGROUND

### Field

Certain aspects of the present disclosure generally relate to wireless communications and, more particularly, to methods and apparatus for communicating the set of modulation coding scheme (MCS) that is supported by a device in a wireless communications network.

### Background

In order to address the issue of increasing bandwidth requirements demanded for wireless communications systems, different schemes are being developed to allow multiple user terminals to communicate with a single access point by sharing the channel resources while achieving high data throughputs. Multiple Input Multiple Output (MIMO) technology represents one such approach that has recently emerged as a popular technique for next generation communication systems. MIMO technology has been adopted in several emerging wireless communication standards such as the Institute of Electrical and Electronics Engineers (IEEE) 802.11 standard. The IEEE 802.11 denotes a set of Wireless Local Area Network (WLAN) air interface standards developed by the IEEE 802.11 committee for short-range communications (e.g., tens of meters to a few hundred meters).

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N_{T}*, *N_{R}*}. Each of the *N_{S}* independent channels corresponds to a dimension. The MIMO system can provide improved performance (e.g., higher throughput and/or greater reliability) if the additional dimensionalities created by the multiple transmit and receive antennas are utilized.

In wireless networks with a single Access Point (AP) and multiple user stations (STAs), concurrent transmissions may occur on multiple channels toward different stations, both in the uplink and downlink direction. In wireless networks employing an IEEE 802.11 ah standard, APs and STAs may transmit frames that have variable lengths. Many challenges are present in such systems.

### SUMMARY

Various implementations of systems, methods and devices within the scope of the appended claims each have several aspects, no single one of which is solely responsible for the desirable attributes described herein. Without limiting the scope of the appended claims, some prominent features are described herein.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

One aspect of the disclosure provides an apparatus for wireless communication. The apparatus includes a processing system configured to decode a message identifying a duration constraint for a response message and select one or more parameters for transmission of the response message based at least in part on the duration constraint. The apparatus further comprises an interface for outputting the response message for transmission using the selected one or more parameters over the duration constraint.

Another aspect disclosed is a method for wireless communication. The method includes processing a message identifying a duration constraint for a response message. The method further includes selecting one or more parameters for transmission of the response message based at least in part on the duration constraint.

Another aspect disclosed is an apparatus for wireless communication. The apparatus includes means for decoding a message identifying a duration constraint for a response message and means for selecting one or more parameters for transmission of the response message based at least in part on the duration constraint.

Another aspect disclosed is a computer program product comprising a computer readable medium encoded thereon with instructions that when executed cause an apparatus to perform a method of wireless communication. The method includes processing a message identifying a duration constraint for a response message and selecting one or more parameters for transmission of the response message based at least in part on the duration constraint.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a diagram of a wireless communications network in accordance with certain aspects of the present disclosure.
FIG. 2 illustrates a block diagram of an example access point and user terminals in accordance with certain aspects of the present disclosure.
FIG. 3 illustrates a block diagram of an example wireless device in accordance with certain aspects of the present disclosure.
FIG. 4 illustrates an example of a management packet.
FIG. 5 is a flowchart of an example method for communication.
FIG. 6 is a functional block diagram of an exemplary device that may be employed within a wireless communication system.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Although particular aspects are described herein, many variations and permutations of these aspects fall within the scope of the disclosure. Although some benefits and advantages of the described aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of aspects. The detailed description and drawings are merely illustrative of the disclosure rather than limiting.

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. A TDMA system may implement GSM or some other standards known in the art. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An OFDM system may implement IEEE 802.11 or some other standards known in the art. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA. A SC-FDMA system may implement 3GPP-LTE (3^{rd} Generation Partnership Project Long Term Evolution) or other standards.

The teachings herein may be incorporated into (e.g., implemented within or performed by) a variety of electronic devices, such as wired or wireless apparatuses (e.g., nodes). In some aspects, a wireless node implemented in accordance with the teachings herein may comprise an access terminal ("AT") or STA, an AP or a relay-capable wireless device having at least one of a STA or AP operation, i.e., a wireless node may have AT or STA operation, AP operation, or both AT/STA and AP operations..

An access point ("AP") may comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as an access terminal, a subscriber station, a subscriber unit, a mobile station, a remote station, a remote terminal, a user terminal, a user agent, a user device, user equipment, a user station, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects the node is a wireless node. Such wireless node may provide, for example, connectivity for or to a network (e.g., a wide area network such as the Internet or a cellular network) via a wired or wireless communication link.

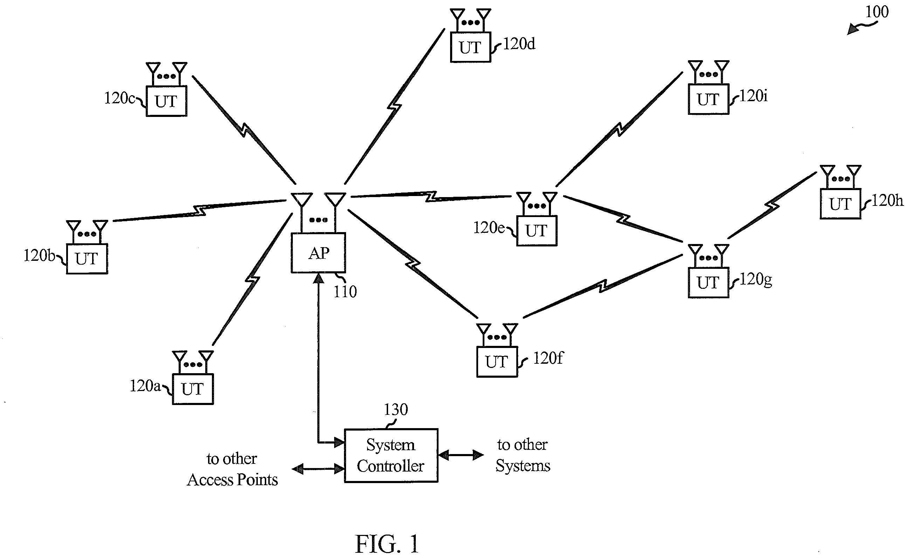

FIG. 1 illustrates a multiple-access multiple-input multiple-output (MIMO) system 100 with access points 110 and user terminals 120a through 120i. For simplicity, only one access point (AP) 110 is shown in FIG. 1. An access point 110 is generally a fixed station that communicates with the user terminals 120a-i and may also be referred to as a base station or a wireless device, or using some other terminology. An STA or user terminal 120a-i may be fixed or mobile and may also be referred to as a mobile station or a wireless device, or using some other terminology. For simplicity, this device is referred to as a user terminal (UT) 120a-i. The AP 110 may communicate with one or more UT 120a-i at any given moment on the downlink and uplink. The downlink (i.e., forward link) is the communication link from the access point 110 to the user terminals 120a-i, and the uplink (i.e., reverse link) is the communication link from the user terminals 120 to the access point 110. A user terminal 120a-i may also communicate peer-to-peer with another user terminal 120a-i. A system controller 130 couples to and provides coordination and control for the access points 110.

While portions of the following disclosure will describe user terminals 120 capable of communicating via Spatial Division Multiple Access (SDMA), for certain aspects, the UT 120 may also include some user terminals that do not support SDMA. Thus, for such aspects, the AP 110 may be configured to communicate with both SDMA and non-SDMA user terminals 120. This approach may conveniently allow older versions of user terminals ("legacy" stations) that do not support SDMA to remain deployed in an enterprise, extending their useful lifetime, while allowing newer SDMA user terminals 120 to be introduced as deemed appropriate.

The system 100 employs multiple transmit and multiple receive antennas for data transmission on the downlink and uplink. The AP 110 is equipped with *Nₐₚ* antennas and represents the multiple-input (MI) for downlink transmissions and the multiple-output (MO) for uplink transmissions. A set of *K* selected UTs 120 collectively represents the multiple-output for downlink transmissions and the multiple-input for uplink transmissions. For pure SDMA, it is desired to have *Nₐₚ* ≥ *K* ≥ 1 if the data symbol streams for the *K* user terminals are not multiplexed in code, frequency or time by some means. *K* may be greater than *Nₐₚ* if the data symbol streams can be multiplexed using TDMA technique, different code channels with CDMA, disjoint sets of sub-bands with OFDM, and so on. Each selected user terminal 120 may transmit user-specific data to and/or receive user-specific data from the access point 110. In general, each selected user terminal 120 may be equipped with one or multiple antennas (i.e., *Nᵤₜ* ≥ 1). The *K* selected user terminals 120 can have the same number of antennas, or one or more user terminals 120 may have a different number of antennas.

The SDMA system 100 may be a time division duplex (TDD) system or a frequency division duplex (FDD) system. For a TDD system, the downlink and uplink share the same frequency band. For an FDD system, the downlink and uplink use different frequency bands. The system 100 may also utilize a single carrier or multiple carriers for transmission. Each user terminal 120 may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, where each time slot may be assigned to a different UT 120.

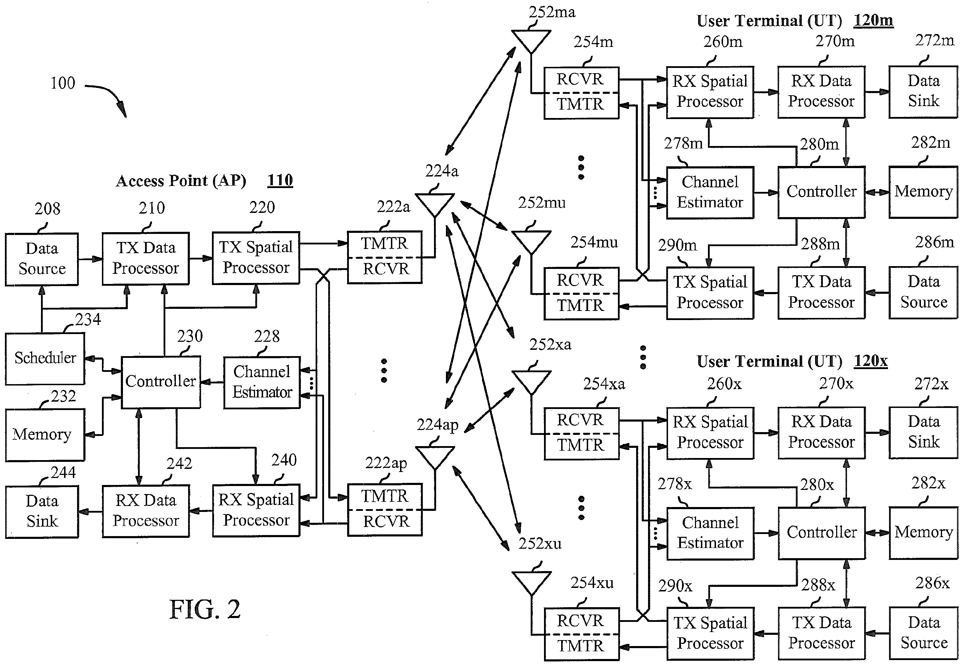

FIG. 2 illustrates a block diagram of the AP 110 and two UTs 120m and 120x in MIMO system 100. The AP 110 is equipped with *Nₜ* antennas 224a through 224ap. The UT 120m is equipped with *N_{ut,m}* antennas 252ma through 252mu, and the UT 120x is equipped with *N_{ut,x}* antennas 252xa through 252xu. The AP 110 is a transmitting entity for the downlink and a receiving entity for the uplink. The UT 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "*dn*" denotes the downlink, the subscript "*up*" denotes the uplink, *Nᵤₚ* user terminals are selected for simultaneous transmission on the uplink, and *N_{dn}* user terminals are selected for simultaneous transmission on the downlink. *Nᵤₚ* may or may not be equal to *N_{dn}*, and *Nᵤₚ* and *N_{dn}* may be static values or may change for each scheduling interval. Beam-steering or some other spatial processing technique may be used at the AP 110 and/or the UT 120.

On the uplink, at each UT 120 selected for uplink transmission, a TX data processor 288 receives traffic data from a data source 286 and control data from a controller 280. Memory 282, which may include both read-only memory (ROM) and random access memory (RAM), provides instructions and data to the controller 280. The TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N_{ut,m}* transmit symbol streams for the *N_{ut,m}* antennas. Each transmitter unit (TMTR) 254 receives and processes (e.g., converts to analog, amplifies, filters, and frequency upconverts) a respective transmit symbol stream to generate an uplink signal. *N_{ut,m}* transmitter units 254 provide *N_{ut,m}* uplink signals for transmission from *N_{ut,m}* antennas 252, for example to transmit to the AP 110.

*Nᵤₚ* user terminals 120 may be scheduled for simultaneous transmission on the uplink. Each of these user terminals 120 may perform spatial processing on its respective data symbol stream and transmit its respective set of transmit symbol streams on the uplink to the AP 110.

At the AP 110, *Nₐₚ* antennas 224a through 224ap receive the uplink signals from all *Nᵤₚ* user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the *Nₐₚ* received symbol streams from *Nₐₚ* receiver units 222 and provides *Nᵤₚ* recovered uplink data symbol streams. The receiver spatial processing may be performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal 120. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing. Memory 232, which may include both read-only memory (ROM) and random access memory (RAM), provides instructions and data to the controller 230.

On the downlink, at the AP 110, a TX data processor 210 receives traffic data from a data source 208 for *N_{dn}* user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. The TX data processor 210 provides *N_{dn}* downlink data symbol streams for the *N_{dn}* user terminals. A TX spatial processor 220 performs spatial processing (such as a precoding or beamforming) on the *N_{dn}* downlink data symbol streams, and provides *Nₐₚ* transmit symbol streams for the *Nₐₚ* antennas. Each transmitter unit 222 receives and processes a respective transmit symbol stream to generate a downlink signal. *Nₐₚ* transmitter units 222 may provide *Nₐₚ* downlink signals for transmission from *Nₐₚ* antennas 224, for example to transmit to the user terminals 120.

At each UT 120, *N_{ut,m}* antennas 252 receive the *Nₐₚ* downlink signals from the AP 110. Each receiver unit 254 processes a received signal from an associated antenna 252 and provides a received symbol stream. An RX spatial processor 260 performs receiver spatial processing on *N_{ut,m}* received symbol streams from *N_{ut,m}* receiver units 254 and provides a recovered downlink data symbol stream for the UT 120. The receiver spatial processing may be performed in accordance with the CCMI, MMSE, or some other technique. An RX data processor 270 processes (e.g., demodulates, deinterleaves and decodes) the recovered downlink data symbol stream to obtain decoded data for the user terminal. The decoded data may be provided to a data sink 272 for storage and/or a controller 280 for further processing.

At each UT 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates for the AP 110. Controller 280 for each user terminal 120 typically derives the spatial filter matrix for the user terminal 120 based on the downlink channel response matrix *H_{dn,m}* for that user terminal 120. Controller 230 derives the spatial filter matrix for the access point 110 based on the effective uplink channel response matrix *H_{up,eff}*. The controller 280 for each user terminal 120 may send feedback information (e.g., the downlink and/or uplink eigenvectors, eigenvalues, SNR estimates, and so on) to the AP 110. The controllers 230 and 280 may also control the operation of various processing units at the AP 110 and UT 120, respectively.

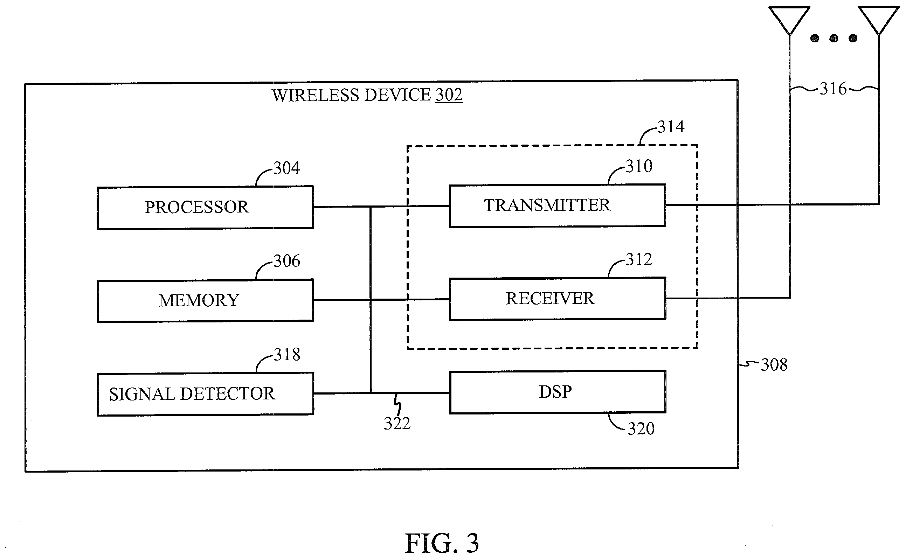

FIG. 3 illustrates various components that may be utilized in a wireless device 302 that may be employed within the wireless communication system 100. The wireless device 302 is an example of a device that may be configured to implement the various methods described herein. The wireless device 302 may implement an AP 110 or a UT 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 may perform logical and arithmetic operations based on program instructions stored within the memory 306. The instructions in the memory 306 may be executable to implement the methods described herein.

The processor 304 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include a computer program product for communication comprising a computer-readable medium encoded thereon with instructions that, when executed, causes an apparatus to perform one or more steps associated with one or more methods for modifying relay operation of a relay-compatible wireless device. Instructions may include source code format, binary code format, executable code format, or any other suitable format of code. The code, or instructions, when executed by one or more processors, causes the processing system to perform the various functions described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

The various components of the wireless device 302 may individually or in combination with one or more other components provide a communications interface. One or more communications interfaces of the device 302 may be configured to receive or transmit a message, such as a request or a reply message, by other components of the wireless device 302, such as the processor 304, transmitter 310, receiver 312, or the DSP 320. For example, the processor 304 may provide an interface by being operatively coupled to one or more signal lines for providing electrical signals to one or more other components of the wireless device 302, or the signal lines may be configured to provide electrical signals to components external to the wireless device 302. In some aspects, the transmitter 310 may comprise an interface by transmitting radio signals over the antenna 316. Similarly the receiver 312 may receive data over an interface by receiving electrical signals from the antenna 316.

In some aspects, the wireless system 100 illustrated in FIG. 1 operates in accordance with IEEE 802.11ah wireless communications standard. The IEEE 802.11ah represents an IEEE 802.11 amendment that allows use with low transmit power IEEE 802.11 wireless networks. The IEEE 802.11ah standard may also sometimes be referred to as the Sub 1 GHz (S1G) wireless communications standard. The IEEE 802.11ah standard is targeted at enabling sensor type of applications. In these applications, the sensor often has a low transmit power capability.

In other 802.11 standards, different devices may support different communication data rates. Further a device, such as UT 120, may provide to a network device, such as AP 110, the set of MCS that is supported by the UT 120. Accordingly, the AP 110 knows which MCS will be used for communication with the UT 120.

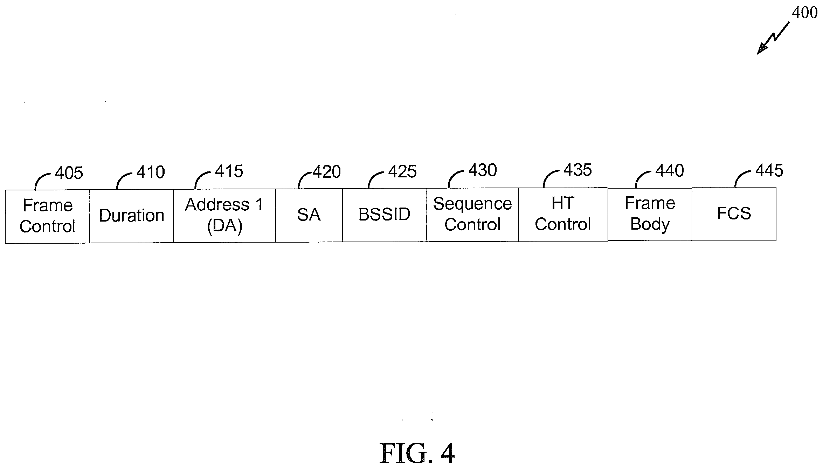

FIG. 4 illustrates an example of a management packet 400. As shown, the management packet includes a frame control (fc) field 405 of 2 bytes, a duration (dur) field 410 of 2 bytes, and address 1 (destination address (da)) field 415 of 6 bytes, an address 2 (sender address (sa)) field 420 of 6 bytes, a basic service set identifier (BSSID) field 425 of 6 bytes, a sequence control (sc) field 430 of 2 bytes, an HT control field 435 of 4 bytes, a frame body 440 of variable size, and a frame check sequence field 445 of 4 bytes. In some aspects, where the management packet 400 is communicated for devices supporting HT, but not VHT, the HT control field 435 may include an HT capabilities element, but not a VHT capabilities element. In some aspects, where the management packet 400 is communicated for devices supporting VHT (and therefore also support HT) the HT control field 435 may include both an HT capabilities element and a VHT capabilities element. In some aspects, devices that support HT communication may transmit information about the supported set of MCS in a HT capabilities element of a HT control field (e.g., HT control field 435) of a management packet (e.g., management packet 400). For example, the HT capabilities element includes a plurality of bits that define a set of MCS index values. The mapping of MCS index values to actual MCSs may be defined by the standard. For example, a first bit may map to a first MCS and a second bit may map to a second MCS. Depending on the value of the bits received in the HT control field 435, the AP 110 can determine which mapped MCS is supported, and which mapped MCS is not supported.

Further in some aspects, electronic devices that support VHT communication transmit information about the supported set of MCS in a VHT capabilities element of an HT control field (e.g., HT control field 435) of a management packet (e.g., management packet 400). The VHT capabilities element does not correspond to a mapping of individual supported MCS. Rather, the VHT capabilities element indicates the maximum MCS that is supported per each number of spatial streams. The maximum MCS that is supported per each number of spatial streams may be referred to as an MCS set (MCSSet) and may be written as an <MCS, Nₛₛ> tuple, where MCS indicates the maximum MCS and *Nₛₛ* indicates the number of spatial streams. An AP 110 receiving the VHT capabilities element assumes the UT 120 supports all MCS for a given spatial stream that are equal to or less than the maximum MCS indicated as supported for the given spatial stream. Furthermore, some MCS are assumed to be implicitly supported and no indication is available to indicate they are not supported.

In some situations, a UT 120 may respond to a frame received from an AP 110 by transmitting a management packet 400 or other frame that has a variable length. Control response frames in S1G may be generated when certain procedures are used by UTs 120 participating in an exchange (e.g., in a link adaptation procedure or target wake time procedure). However, when a UT 120 transmits a frame of variable length, the AP 110 may not be able to correctly calculate the value to be included in a duration field of the eliciting frame transmitted to the UT 120, hence it will not be able to correctly set the network allocation vector (NAV). The UT 120 may want to select a MCSSet for the control response frame and fix the control response frame length to allow the AP 110 eliciting the response to correctly calculate the duration field of its eliciting frame. For example, MCSs in a MCSSet may have an order based on the effective bit rate data that can be sent using the particular MCS for a given spatial stream. The greater the effective bit rate, the "greater" the MCS.

Accordingly, herein are described systems and methods for allowing for a UT 120 to indicate which MCSSets are supported by the UT 120 to the AP 110. For example, a UT 120 receives a frame from an AP 110 or another UT 120 using a particular MCSSet and with a particular value in its duration field. In some situations, the UT 120, based on variable length response control frame, may be unable to respond within the duration allowed by the frame received from the AP 110 or the other UT 120. Because of the imbalance or difference between the duration to transmit the variable length control response frame of the UT 120 and the duration indicated by the AP 110 or the other UT 120, difficulties in communication may arise.

In one aspect, a UT 120 transmits a control response that is of constant length and selects a MCSSet according to a defined MCS selection criterion. In some aspects, an AP 110 may send an eliciting frame indicating to the responding UT 120 the type of control response frame by using the bandwidth, aggregation, short guard interval (GI), response indication fields in a signal (SIG) field of the physical layer convergence procedure (PLCP) preamble, and the acknowledgement policy field in the medium access control (MAC) header of the eliciting frame. For example, the control response frame may be 32 bytes if the aggregation field is set to 1 or 14 bytes if the aggregation field is set to 0. In some aspects, a UT 120 may not include an HT control field in a control response frame that is of length 32 bytes or 14 bytes. In some aspects, a UT 120 may include an HT control field if a response indication field is set to a long response in the eliciting frame. In some aspects, a UT 120 may include a HT control field in non-control response frames transmitted to the UT 120 requesting link adaptation information.

In some aspects, an AP 110 may send an eliciting frame to a UT 120 and may calculate the duration field assuming the UT 120 follows a defined MCS selection criterion. In some aspects, the defined MCS selection criterion may be a pre-defined table of MCSSets which is known by all APs and UTs. The UT 120 may select an MCSSet from a number of MCSSets that are supported by the AP 110, that gives the control response frame a duration which is less than or equal to the expected duration from the AP 110. In some aspects, the UT 120 may select a higher MCS for a given *Nₛₛ* than the eliciting frame. In these aspects, UT 120 may extend the length of the control response frame (e.g., by using a control wrapper, or adding the next target wake time (TWT) field in a block acknowledgement (BA) TWT frame or a TWT acknowledgement (TACK) frame) for a given duration. In some aspects, the UT 120 may select a lower MCS for a given *Nₛₛ* than the eliciting frame if the control response frame is shorter than the expected control response frame length by the AP 110.

In some aspects, an AP 110 may send an eliciting frame to a UT 120 and may calculate the duration field assuming the UT 120 uses the same MCSSet as the UT 120 used in its last transmission to the AP 110. The UT 120 may select an MCSSet from a number of MCSSets that are supported by the AP 110, that gives the control response frame a duration which is less than or equal to the expected duration from the AP 110. In some aspects, the UT 120 may select the same MCSSet as the UT 120 used in its last transmission to the AP 110. In some aspects, the UT 120 may select a higher MCS for a given *Nₛₛ* than it used in its last transmission to the AP 110. In these aspects, UT 120 may extend the length of the control response frame (e.g., by using a control wrapper, or adding the next target wake time (TWT) field in a block acknowledgement (BA) TWT frame or a TWT acknowledgement (TACK) frame) for a given duration. In some aspects, the UT 120 may select a lower MCS for a given *Nₛₛ* than it used in its last transmission to the AP 110 if the control response frame is shorter than the expected control response frame length by the AP 110.

In one aspect, an AP 110 may send an eliciting frame to a UT 120 and may set the value of the duration field of the eliciting frame at its discretion. In this aspect, the UT 120 receiving the eliciting frame may select an MCSSet that is supported by the AP 110 such that the obtained duration to transmit the control response frame falls within the remaining duration of the NAV that was set by the eliciting frame.

In one aspect, an AP 110 and a UT 120 may pre-negotiate the MCSSet to be used for control response frames. In some aspects, the AP 110 or the UT 120 may indicate the MCSSet in a high-throughput (HT) control field included in the frames sent to the UT 120 or AP 120 eliciting the control response frame. In some aspects, the AP 110 or UT 120 may indicate the MCSSet during association with the UT 120 or AP 120 eliciting the control response frame or update the MCSSet subsequently via management frames. In some aspects, an AP 110 and a UT 120 may define additional negotiation to be used for certain control response frames (TACK, BAT, short target wait time acknowledgement (STACK), etc.). In some aspects, a unified negotiation for all control response frames may be defined.

In one aspect, an AP 110 or a UT 120 may indicate an MCSSet as an absolute value for a given bandwidth. In this aspect, APs 110 and UTs 120 may have to follow channel bandwidth rules when indicating an MCSSet. In another aspect, an AP 110 or a UT 120 may indicate an MCSSet as a difference with respect to the expected MCSSet for control response frames.

In one aspect, the defined MCS selection criteria requires eliminating MCSSets from the CandidateMCSSet that have a data rate that is higher than the data rate of the MCSSet of the frame received from the AP 110 using the largest possible value of channel bandwidth that is no larger than the value of channel bandwidth of the received frame. In one aspect, when the channel bandwidth is equal to CBW1, the lowest rate can be either MCS0 or MCS10 and this can be predefined. For example, always select MCS10 instead of MCS0. The selection criteria may also require determining the highest *Nₛₛ* value of the CandidateMCSSet that is less than or equal to the *Nₛₛ* value of the received frame and eliminating the MCSSets from the CandidateMCSSet that do not have a *Nₛₛ* value equal to the highest *Nₛₛ* value. The selection criteria may also require determining the highest rate MCSSet of the CandidateMCSSet for which the modulation value of each stream is less than or equal to the modulation value of each stream of the MCSSet of the received frame and for which the coding rate is less than or equal to the coding rate of the MCSSet from the received frame. This MCSSet is the primary MCSSet for the response transmission. The mapping from the MCSSet to modulation and coding rate is dependent on the attached physical (PHY) layer. For the purpose of comparing modulation values, the following sequence shows increasing modulation values: BPSK, QPSK, 16-QAM, 64-QAM, 256-QAM. If no MCSSet meets the condition regarding the modulation value and coding rate, then each MCSSet of the CandidateMCSSet that has the highest value of *Nₛₛ* in the CandidateMCSSet may be removed. If the resulting CandidateMCSSet is empty, then set the CandidateMCSSet to the S1G PHY mandatory MCSs. Repeat the step regarding the modulation value and coding rate using the modified CandidateMCSSet.

Once the primary MCSSet has been selected, a UT 120 may select an alternate MCS accordingly that meets the conditions of the duration constraint discussed above. The UT 120 may transmit the control response frame using either the primary MCSSet or an alternate MCSSet, if one exists. The duration of the control response frame at the alternate rate may be the same as the duration of the frame at the primary rate.

In one aspect, a rule for MCS selection for group addressed data and management frames may be defined. In this aspect, if the BSSBasicS1GMCS_NSSSet is not empty, a frame may be transmitted in a S1G physical layer protocol data unit (PPDU) using one of the <S1G-MCS, NSS> tuples included in the BSSBasicS1GMCS_NSSSet parameter.

In one aspect, a rule for MCS selection for individually-addressed data and management frames may be defined. In this aspect, a UT 120 shall not transmit a frame using a <S1G-MCS, NSS> tuple that is not supported by the receiver UT 120, as reported in any supported S1G-MCS and NSS set field in management frames transmitted by the receiver STA.

In one aspect, a S1G STA that is a member of a BSS shall not transmit a frame using a value for the channel bandwidth (CH_ BANDWIDTH) parameter of an array of data called the transmit vector (TXVECTOR) that is not permitted for use in the BSS, as reported in the most recently received S1G operation element except for: transmissions that are performed on a tunneled direct-link setup (TDLS) off-channel link or transmissions that are performed on a selected sub-channel transmission (SST) procedure off-channel link. In another aspect, a STA shall not initiate transmission of a frame using a <S1G-MCS, NSS> tuple that is not in the OperationalS1GMCS_NSSSet.

In one aspect, a rule for rate selection for control frames that initiate a transmission opportunity (TXOP) may be defined. When transmitting a S1G PPDU, a STA may select a <S1G-MCS, NSS> tuple from the BSSBasicS1GMCS_NSSSet parameter when protection is required and may select a <S1G-MCS, NSS> tuple from the SupportedS1GMCS_NSSSet parameter of the intended receiver when protection is not required.

In one aspect, a rule for rate selection for control frames that are not control response frames may be defined. In this aspect, a frame that is carried in a S1G PPDU may be transmitted by the STA using a <S1G-MCS, NSS> tuple supported by the receiver STA, as reported in the supported S1G-MCS and NSS Set field in the S1G capabilities element received from that STA. When the supported S1G-MCS and NSS set of the receiving STA or STAs is not known, the transmitting STA shall transmit using a <S1G-MCS, NSS> tuple in the BSSBasicS1GMCS_NSSSet parameter.

The examples above describe the relationship between an AP 110 and a UT 120. However, the description is not limited to only communication between an AP 110 and a UT 120. A person skilled in the art would understand that the same description could be applied to two peer UTs or peer APs.

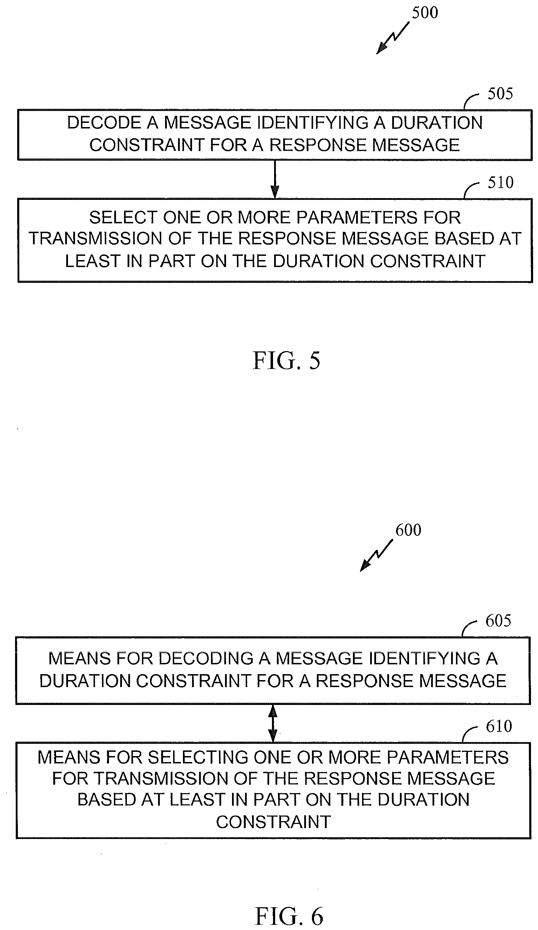

FIG. 5 is a flowchart of an example method 500 for communication. The method is described as implemented by the UT 120. However, as would be understood by one of ordinary skill in the art, the method may be implemented by one or more other suitable electronic devices, such as wireless device 302.

At a block 505, the UT 120 decodes a message identifying a duration constraint for a response message. The message may be provided from AP 110, or another peer UT 120. At a block 510, the UT 120 selects one or more parameters for transmission of the response message based at least in part on the duration constraint. The selected one or more parameters may comprise an MCS and number of spatial streams based at least in part on the duration constraint, e.g., amount of time or duration for transmission. An exemplary device type is whether the electronic device is functioning in the communication network as an AP 110 or a UT 120. Another exemplary device type is whether the electronic device is communicating in the communication network as a UT 120 to an AP 110 or as a UT 120 to another UT 120 in a peer-to-peer communication. The MCS and number of spatial streams of the message may be used as a basis for selecting the MCS and number of spatial streams of the response message. As described elsewhere herein, the selected MCS and number of spatial streams for the response message may be such that the duration for the UT 120 to transmit the response message is less than or equal to a duration of the duration constraint.

FIG. 6 is a functional block diagram of an apparatus 600 for wireless communication, in accordance with certain aspects described herein. Those skilled in the art will appreciate that the apparatus 600 may have more components than the simplified block diagrams shown in FIG. 6. FIG. 6 includes only those components useful for describing some prominent features of implementations within the scope of the claims.

The apparatus 600 comprises means 605 for decoding a first message identifying a duration constraint for a response message. The means 605 for decoding a message identifying a duration constraint for a response message may be configured to perform one or more of the functions discussed above with respect to the blocks 505 and 510 illustrated in FIG. 5. The means 605 for decoding may comprise one or more of the receiver 312, the transceiver 314, the processor 304, and the memory 306, discussed above with respect to FIG. 3. In some aspects, the means 605 for decoding may comprise a set of steps performed on a general purpose computer. For example, the computer may receive the first message from a wireless device 302. The computer may then read the data contained in the first message and determine that the message contains an indication of a duration constraint for a response message that is sent in response to the first message.

The apparatus further comprises means 610 for selecting one or more parameters for transmission of the response message based at least in part on the duration constraint. The means 610 for selecting one or more parameters may be configured to perform one or more of the functions discussed above with respect to the blocks 505 and 510 illustrated in FIG. 5. In some aspects, the one or more parameters may comprise a modulation coding scheme and a number of spatial streams. The means 610 for selecting may comprise one or more of the processor 304 and the memory 306, discussed above with respect to FIG. 3. In some aspects, the means 610 for selecting may comprise a set of steps performed on a general purpose computer. For example, the computer may determine a number of sets of modulation coding schemes and a number of spatial streams for the response message. The computer may then determine based on the duration constraint of the first message which modulation coding scheme and what number of spatial streams are possible in order transmit the response message within the duration constraint. The computer may then select an acceptable modulation coding scheme and number of spatial streams for the response message.

In some aspects, the means 605 for decoding may comprise a set of steps performed on a general purpose computer. For example, the computer may receive a plurality of messages according to a periodicity. During the reception of the plurality of messages the computer determines that the RF chain is occupied. The computer may then determine portions of time between the reception of the plurality of messages when the RF chain is free. The computer may then determine that at least some of the portion of time between receptions may be granted to a first radio access technology.

In some aspects, the selecting means 610 comprises means for selecting the modulation coding scheme and the number of spatial streams such that the duration to transmit the response message is less than or equal to a duration of the duration constraint. In some aspects, the selecting means 610 comprises means for determining a modulation coding scheme and a number of spatial streams of the first message, means for determining an allowable set of modulation coding schemes and number of spatial streams for the response message based at least in part on the modulation coding scheme and the number of spatial streams of the first message, and means for selecting from the allowable set of modulation coding schemes and number of spatial streams for the response message a modulation coding scheme and a number of spatial streams such that the duration to transmit the response message is less than or equal to a duration of the duration constraint. In some aspects, the first message comprises an indication of a length of the response message and the selecting means 610 comprises means for selecting the one or more parameters based at least in part on the length of the response message. In some aspects, the selecting means 610 comprises means for determining a modulation coding scheme and a number of spatial streams of a message previously transmitted by the apparatus, means for determining an allowable set of modulation coding schemes and number of spatial streams for the response message based at least in part on the modulation coding scheme and the number of spatial streams of the message previously transmitted by the apparatus, and means for selecting from the allowable set of modulation coding schemes and number of spatial streams for the response message a modulation coding scheme and a number of spatial streams such that the duration to transmit the response message is less than or equal to the a duration of duration constraint. In some aspects, the apparatus 600 further comprises a means for generating a second message indicating the modulation coding scheme and the number of spatial streams for the response message. In some aspects, the means for determining the modulation coding scheme and the number of spatial streams of the first message comprises means for extracting a modulation coding scheme and a number of spatial streams from a field in the first message. In some aspects, the allowable set of modulation coding schemes and number of spatial streams for the response message is defined based on the modulation coding scheme and the number of spatial streams of the first message.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations, module, or steps illustrated in Figures, those operations may have corresponding counterpart means-plus-function components. For example, a user terminal may comprise means for receiving a message comprising a null data packet announcement, the null data packet announcement comprising a sequence number, means for determining channel state information based at least in part on a null data packet associated with the null data packet announcement, and means for transmitting a message comprising the sequence number of the null data packet announcement and at least one parameter of the determined channel state information.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "*at least one of: A, B or C*" is intended to cover A or B or C or A and B or A and C or B and C or A, B and C or 2A or 2B or 2C and so on.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

As used herein, the term interface may refer to hardware or software configured to connect two or more devices together. For example, an interface may be a part of a processor or a bus and may be configured to allow communication of information or data between the devices. The interface may be integrated into a chip or other device. For example, in some aspects, an interface may comprise a receiver configured to receive information or communications from a device at another device. The interface (e.g., of a processor or a bus) may receive information or data processed by a front end or another device or may process information received. In some aspects, an interface may comprise a transmitter configured to transmit or communicate information or data to another device. Thus, the interface may transmit information or data or may prepare information or data for outputting for transmission (e.g., via a bus).

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to cany or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

If implemented in hardware, an example hardware configuration may comprise a processing system in a wireless node. The processing system may be implemented with bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a UT 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

In a hardware implementation, machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

### FURTHER SUMMARY OF THE INVENTION

1. An apparatus for wireless communication, comprising:
   a processing system configured to:
      decode a first message identifying a duration constraint for a response message; and
      select one or more parameters for transmission of the response message based at least in part on the duration constraint; and
   an interface configured to provide the response message for transmission using the selected one or more parameters over the duration constraint.
2. The apparatus of 1, wherein the selection comprises selecting a modulation coding scheme and a number of spatial streams such that a duration to transmit the response message is less than or equal to a duration of the duration constraint.
3. The apparatus of 1, wherein the first message comprises an indication of a length of the response message, wherein the selection is based at least in part on the length of the response message.
4. The apparatus of 1, wherein the selection comprises:
   determining a modulation coding scheme and a number of spatial streams of the first message;
   determining an allowable set of modulation coding schemes and number of spatial streams for the response message based at least in part on the determined modulation coding scheme and the determined number of spatial streams of the first message; and
   selecting from the allowable set the modulation coding scheme and the number of spatial streams for the response message such that a duration to transmit the response message is less than or equal to a duration of the duration constraint.
5. The apparatus of 4, wherein determining the modulation coding scheme and the number of spatial streams of the first message comprises extracting a modulation coding scheme and a number of spatial streams from a field in the first message.
6. The apparatus of 4, wherein the allowable set of modulation coding schemes and number of spatial streams for the response message is defined based on the modulation coding scheme and the number of spatial streams of the first message.
7. The apparatus of 1, wherein the selection comprises:
   determining a modulation coding scheme and a number of spatial streams of a message previously transmitted by the apparatus;
   determining an allowable set of modulation coding schemes and number of spatial streams for the response message based at least in part on the modulation coding scheme and the number of spatial streams of the message previously transmitted by the apparatus; and
   selecting from the allowable set the modulation coding scheme and the number of spatial streams for the response message such that a duration to transmit the response message is less than or equal to a duration of the duration constraint.
8. The apparatus of 7, wherein determining the modulation coding scheme and the number of spatial streams of the message previously transmitted by the apparatus comprises extracting a modulation coding scheme and a number of spatial streams from a field in the message previously transmitted by the apparatus.
9. The apparatus of 7, wherein the allowable set of modulation coding schemes and number of spatial streams for the response message is defined based on the modulation coding scheme and the number of spatial streams of the message previously transmitted by the apparatus.
10. The apparatus of 10, wherein the selected one or more parameters comprise a modulation coding scheme and a number of spatial streams.
11. A method for wireless communication, comprising:
   processing a first message identifying a duration constraint for a response message; and
   selecting one or more parameters for transmission of the response message based at least in part on the duration constraint.
12. The method of 11, wherein selecting the one or more parameters comprises selecting a modulation coding scheme and a number of spatial streams such that a duration to transmit the response message is less than or equal to a duration of the duration constraint.
13. The method of 11, wherein the first message comprises an indication of a length of the response message, wherein selecting the one or more parameters comprises selecting the one or more parameters based at least in part on the length of the response message.
14. The method of 11, wherein selecting the one or more parameters comprises:
   determining a modulation coding scheme and a number of spatial streams of the first message;
   determining an allowable set of modulation coding schemes and number of spatial streams for the response message based at least in part on the determined modulation coding scheme and the determined number of spatial streams of the first message; and
   selecting from the allowable set the modulation coding scheme and the number of spatial streams for the response message such that a duration to transmit the response message is less than or equal to a duration of the duration constraint.
15. The method of 14, wherein determining the modulation coding scheme and the number of spatial streams of the first message comprises extracting a modulation coding scheme and a number of spatial streams from a field in the first message.
16. The method of 14, wherein the allowable set of modulation coding schemes and number of spatial streams for the response message is defined based on the modulation coding scheme and the number of spatial streams of the first message.
17. The method of 11, wherein selecting the one or more parameters comprises:
   determining a modulation coding scheme and a number of spatial streams of a message previously transmitted by the apparatus;
   determining an allowable set of modulation coding schemes and number of spatial streams for the response message based at least in part on the modulation coding scheme and the number of spatial streams of the message previously transmitted by the apparatus; and
   selecting from the allowable set the modulation coding scheme and the number of spatial streams for the response message such that a duration to transmit the response message is less than or equal to a duration of the duration constraint.
18. The method of 17, wherein determining the modulation coding scheme and the number of spatial streams of the message previously transmitted by the apparatus comprises extracting a modulation coding scheme and a number of spatial streams from a field in the message previously transmitted by the apparatus.
19. The method of 17, wherein the allowable set of modulation coding schemes and number of spatial streams for the response message is defined based on the modulation coding scheme and the number of spatial streams of the message previously transmitted by the apparatus.
20. The method of 11, further comprising transmitting the response message using the selected one or more parameters over the duration constraint.
21. An apparatus for wireless communication, comprising:
   means for decoding a first message identifying a duration constraint for a response message; and
   means for selecting one or more parameters for transmission of the response message based at least in part on the duration constraint.
22. The apparatus of 21, wherein the selecting means comprises means for selecting a modulation coding scheme and a number of spatial streams such that a duration to transmit the response message is less than or equal to a duration of the duration constraint.
23. The apparatus of 21, wherein the first message comprises an indication of a length of the response message, wherein the selecting means comprises means for selecting the one or more parameters based at least in part on the length of the response message.
24. The apparatus of 21, wherein the selecting means comprises:
   means for determining a modulation coding scheme and a number of spatial streams of the first message;
   means for determining an allowable set of modulation coding schemes and number of spatial streams for the response message based at least in part on the modulation coding scheme and the number of spatial streams of the first message; and
   means for selecting from the allowable set the modulation coding scheme and the number of spatial streams for the response message such that a duration to transmit the response message is less than or equal to a duration of the duration constraint.
25. The apparatus of 24, wherein means for determining the modulation coding scheme and the number of spatial streams of the first message comprises means for extracting a modulation coding scheme and a number of spatial streams from a field in the first message.
26. The apparatus of 24, wherein the allowable set of modulation coding schemes and number of spatial streams for the response message is defined based on the modulation coding scheme and the number of spatial streams of the first message.
27. The apparatus of 21, wherein the selecting means comprises:
   means for determining a modulation coding scheme and a number of spatial streams of a message previously transmitted by the apparatus;
   means for determining an allowable set of modulation coding schemes and number of spatial streams for the response message based at least in part on the modulation coding scheme and the number of spatial streams of the message previously transmitted by the apparatus; and
   means for selecting from the allowable set the modulation coding scheme and the number of spatial streams for the response message such that a duration to transmit the response message is less than or equal to a duration of the duration constraint.
28. The apparatus of 27, wherein means for determining the modulation coding scheme and the number of spatial streams of the message previously transmitted by the apparatus comprises means for extracting a modulation coding scheme and a number of spatial streams from a field in the message previously transmitted by the apparatus.
29. The apparatus of 27, wherein the allowable set of modulation coding schemes and number of spatial streams for the response message is defined based on the MCS and number of spatial streams of the message previously transmitted by the apparatus.
30. A wireless node for wireless communication, comprising:
   an antenna;
   a processing system configured to:
      decode a first message received via the antenna identifying a duration constraint for a response message; and
      select one or more parameters for transmission of the response message based at least in part on the duration constraint.

## Claims

1. An apparatus for wireless communication, comprising:
means for generating a response message;
means for decoding a first message to identify a duration constraint and one or more values, the one or more values being indicative of a difference between one or more pre-negotiated parameters and one or more parameters for transmission of the response message;
means for selecting at least one of the one or more parameters based at least in part on the duration constraint and the one or more values; and
means for outputting the response message for transmission using the selected at least one of the one or more parameters over the duration constraint.

2. The apparatus of claim 1, wherein the one or more parameters comprise at least one of a modulation coding scheme or a number of spatial streams,
and wherein the means for selecting selects the at least one of the one or more parameters such that a duration to transmit the response message is less than or equal to a duration of the duration constraint.

3. The apparatus of claim 1, wherein the first message comprises an indication of a length of the response message, wherein the selecting means comprises means for selecting the one or more parameters based at least in part on the length of the response message.

4. The apparatus of claim 1, wherein the selecting means comprises:
means for determining a modulation coding scheme and a number of spatial streams of the first message;
means for determining an allowable set of modulation coding schemes and number of spatial streams for the response message based at least in part on the modulation coding scheme and the number of spatial streams of the first message; and
means for selecting the at least one of the one or more parameters from the allowable set the modulation coding scheme and the number of spatial streams for the response message such that a duration to transmit the response message is less than or equal to a duration of the duration constraint.

5. The apparatus of claim 4, wherein means for determining the modulation coding scheme and the number of spatial streams of the first message comprises means for extracting a modulation coding scheme and a number of spatial streams from a field in the first message.

6. The apparatus of claim 4, wherein the allowable set of modulation coding schemes and number of spatial streams for the response message is defined based on the modulation coding scheme and the number of spatial streams of the first message.

7. The apparatus of claim 1, wherein the selecting means comprises:
means for determining a modulation coding scheme and a number of spatial streams of a message previously outputted for transmission by the apparatus;
means for determining an allowable set of modulation coding schemes and number of spatial streams for the response message based at least in part on the modulation coding scheme and the number of spatial streams of the message previously outputted for transmission transmitted by the apparatus; and
means for selecting the at least one of the one or more parameters from the allowable set the modulation coding scheme and the number of spatial streams for the response message such that a duration to transmit the response message is less than or equal to a duration of the duration constraint.

8. The apparatus of claim 7, wherein an indication of the modulation coding scheme and the number of spatial streams of the message
previously outputted for transmission by the apparatus is in a field in the message previously outputted for transmission by the apparatus.

9. The apparatus of claim 7, wherein the allowable set of modulation coding schemes and number of spatial streams for the response message is defined based on the MCS and number of spatial streams of the message previously outputted for transmission by the apparatus.

10. The apparatus of claim 1 further comprising:
means for transmitting the response message using the selected at least one of the one or more parameters over the duration constraint, wherein the apparatus is configured as a wireless node.

11. A method for wireless communication by an apparatus, comprising:
generating a response message;
processing a first message to identify a duration constraint and one or more values, the one or more values being indicative of a difference between one or more pre-negotiated parameters and one or more parameters for transmission of the response message;
selecting at least one of the one or more parameters based at least in part on the duration constraint and the one or more values: and
outputting, by the apparatus, the response message for transmission using the selected at least one of the one or more parameters over the duration constraint.

12. The method of claim 11, wherein the one or more parameters comprise at least one of a modulation coding scheme or a number of spatial streams, and wherein the at least one of the one or more parameters is selected such that a duration to transmit the response message is less than or equal to a duration of the duration constraint.

13. The method of claim 11, wherein the first message comprises an indication of a length of the response message, wherein selecting the one or more parameters comprises selecting the one or more parameters based at least in part on the length of the response message.

14. The method of claim 11, wherein selecting at least one of the one or more parameters comprises:
determining a modulation coding scheme and a number of spatial streams of the first message;
determining an allowable set of modulation coding schemes and number of spatial streams for the response message based at least in part on the determined modulation coding scheme and the determined number of spatial streams of the first message; and
selecting the at least one of the one or more parameters from the allowable set the modulation coding scheme and the number of spatial streams for the response message such that a duration to transmit the response message is less than or equal to a duration of the duration constraint.

15. The method of claim 14, wherein determining the modulation coding scheme and the number of spatial streams of the first message comprises extracting a modulation coding scheme and a number of spatial streams from a field in the first message.
